## Europäisches Patentamt

## European Patent Office

## Office européen des brevets

(19)

(11) Veröffentlichungsnummer : **0 050 745**
**B1**

(12)

# EUROPÄISCHE PATENTSCHRIFT

(45) Veröffentlichungstag der Patentschrift :
02.05.84

(21) Anmeldenummer : 81107719.7

(22) Anmeldetag : 29.09.81

(51) Int. Cl.³ : **B 62 D 25/08**, B 62 D 35/02

(54) Kraftfahrzeug, insbesondere Personenkraftwagen, mit einer Bugverkleidung unter der Stoßstange.

(30) Priorität : 21.10.80 DE 3039652

(43) Veröffentlichungstag der Anmeldung :
05.05.82 Patentblatt 82/18

(45) Bekanntmachung des Hinweises auf die Patenterteilung : 02.05.84 Patentblatt 84/18

(84) Benannte Vertragsstaaten :
**DE FR GB IT SE**

(56) Entgegenhaltungen :
DE-U- 7 408 125
US-A- 2 998 280

(73) Patentinhaber : BAYERISCHE MOTOREN WERKE
Aktiengesellschaft
Postfach 40 02 40 Petuelring 130
D-8000 München 40 (DE)

(72) Erfinder : Kerschbaum, Hans Dipl.-Ing.
Frankfurter Ring 12
D-8000 München 40 (DE)

(74) Vertreter : Dexheimer, Rolf
Bayerische Motoren Werke Aktiengesellschaft Postfach 40 02 40 Petuelring 130 - AJ-21
D-8000 München 40 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Kraftfahrzeug, insbesondere Personenkraftwagen, mit einer Bugverkleidung unter der Stoßstange

Die Erfindung bezieht sich auf ein Kraftfahrzeug, insbesondere Personenkraftwagen, das an seinem Bugbereich mit einer eine Nummernschild-Trägerplatte tragenden Stoßstange versehen ist, unterhalb der sich ein nach hinten zurückgesetztes und sich im wesentlichen über die ganze Fahrzeugbreite erstreckendes Bugverkleidungsteil befindet, das im Bereich der Nummernschild-Trägerplatte eine Lufteinlaßöffnung aufweist, deren Oberkante höher oder etwa gleichhoch wie die Unterkante der Nummernschild-Trägerplatte liegt, wobei deren untenliegender Randbereich über die Unterkante der Stoßstange nach unten reicht.

Da bei einer derartigen, allgemein bekannten Ausbildung des Bugbereichs eines Personenkraftwagens der untenliegende Randbereich der Nummernschild-Trägerplatte um ein beträchtliches Maß frei nach unten übersteht, bildet sich im Fahrbetrieb an der Unterkante der Nummernschild-Trägerplatte eine starke Luftverwirbelung. Durch diese entstehen insbesondere bei höherer Fahrzeuggeschwindigkeit verschiedene Nachteile. So kann von der Lufteintrittsöffnung nur eine relativ geringe Luftmenge der entstehenden Luftströmung aufgenommen werden, wodruch einem hinter dem Bugverkleidungsteil liegenden Aggregat, beispielsweise dem Ölkühler, nur in vermindertem Maße Kühlluft zugeführt wird. Ferner wird im Fahrbetrieb der Luftwiderstand erhöht. Falls das Bugverkleidungsteil als ein Spoiler ausgebildet ist, wird darüber hinaus dessen Wirkung durch die verminderte Luftbeaufschlagung nicht optimal ausgenützt. Schließlich kann der frei über die Unterkante der Stoßstange hinausragende Randbereich der Nummernschild-Trägerplatte — die durch diese Anordnung auch unschön wirkt — sehr leicht verbogen werden. Durch Fahrzeuge anderer Gattung, beispeilsweise des Typs Lancia « Delta », ist es bekannt, die Nummernschild-Trägerplatte weitgehend in die Stoßstange zu integrieren. Hierbei schließt sich die Frontseite des die Lufteinlaßöffnung aufweisenden Bugverkleidungsteils unmittelbar an die untere Vorderkante der Stoßstange an und verläuft von dieser — lediglich geringfügig zurückgesetzt — in schräger Ebene nach hinten, wobei die Unterkante der Nummernschild-Trägerplatte unter Bildung eines verhältnismäßig kleinen Radius in die Lufteinlaßöffnung übergeht. Bei einem sich nahezu unmittelbar an die Nummernschild-Trägerplatte anschließenden Bugverkleidungsteil treten die eingangs geschilderten Nachteile jedoch kaum in Erscheinung.

Aufgabe der Erfindung ist es, den Bugbereich eines Kraftfahrzeugs mit gattungsgemäß angeordneter Nummernschild-Trägerplatte derart auszubilden, daß die an dieser entstehende Luftströmung ohne nennenswerte Verwirbelung in die Lufteinlaßöffnung eingeleitet wird.

Die Lösung der Aufgabe besteht erfindungsgemäß darin, daß zwischen dem untenliegenden Randbereich der Nummernschild-Trägerplatte und der zugewandten Oberfläche des Bugverkleidungsteils ein sich längs der Nummernschild-Trägerplatte erstreckendes Luftführungsteil vorgesehen ist, dessen Unterkante in einem vertikalen Längsschnitt über seine gesamte Längserstreckung konvex gewölbt ist, wobei sich die Vorderkante der Wölbung etwa auf Höhe der Unterkante der Nummernschild-Trägerplatte befindet, der tiefstliegende Punkt der Wölbung dagegen tiefer liegt als die Unterkante der Nummernschild-Trägerplatte, während die rückwärtige Kante der Wölbung zum oberen Rand der Lufteinlaßöffnung verläuft.

Durch die konvexe Wölbung des Luftführungsteils wird die Luftströmung ohne Bildung von Turbulenzen gezielt in die Lufteinlaßöffnung eingeleitet, was neben der Vermeidung der Nachteile des Standes der Technik auch verschiedene weitere Vorteile hat. So erhält wegen des geringeren Gesamtluftwiderstands der Kraftfahrzeug-Vorderwagen weniger Auftrieb. Das sich hinter dem Bugverkleidungsteil befindende Aggregat wird durch die erhöhte Luftzufuhr ferner wirkungsvoller gekühlt. Schließlich liegt die Nummernschild-Trägerplatte unverbiegbar am Luftführungsteil an, das sich an diese darüber hinaus in optisch ansprechender Weise anschließt.

Da nach einer Ausgestaltung der Erfindung das Luftführungsteil an jeder Schmalseite der Nummernschild-Trägerplatte ein Seitenteil aufweist, das sich von deren Unterkante zur Unterkante der Lufteinlaßöffnung im Bugverkleidungsteil erstreckt und stirnseitig zumindest annähernd bis zum Bugverkleidungsteil heranreicht, wird die aerodynamische Effizienz des Luftführungsteils weiter erhöht.

Nach einer weiteren Ausgestaltung der Erfindung ist das Luftführungsteil als ein separater Einsatz ausgebildet, so daß es unkompliziert nachrüstbar ist und problemlos gegebenenfalls verschiedenartigen Außenformen von Nummernschild-Trägerplatten angepaßt werden kann.

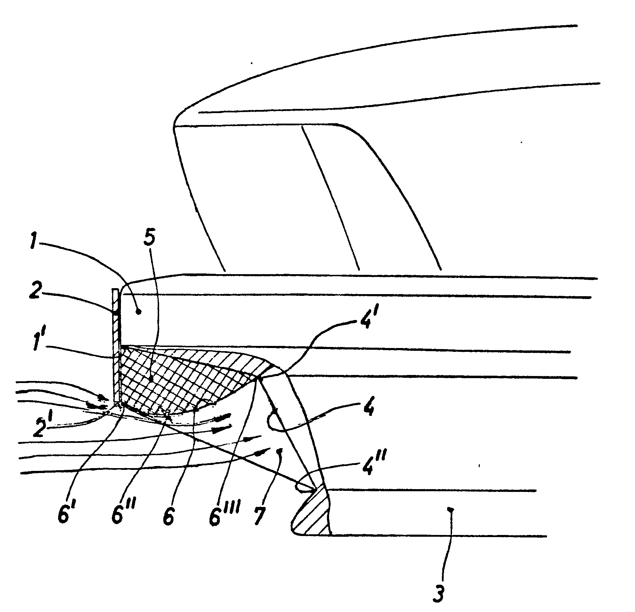

Ein Ausführungsbeispiel der Erfindung ist in der Zeichnung dargestellt, welche eine Teilansicht eines Personenkraftwagenbugs teilweise im Schnitt zeigt.

Der in der Zeichnung dargestellte Bugbereich eines Personenkraftwagens ist mit einer Stoßstange 1 versehen, an der in Mittelbereich ihrer Längserstreckung eine Nummernschild-Trägerplatte 2 befestigt ist, deren untenliegender Randbereich über die Unterkante 1' der Stoßstange 1 nach unten reicht. Unterhalb der Stoßstange 1 befindet sich ein nach hinten zurückgesetztes und über die ganze Fahrzeugbreite erstreckendes Bugverkleidungsteil 3, das als ein Spoiler ausgebildet ist. Im Bereich der Nummernschild-Trägerplatte 2 weist das Bugverkleidungsteil 3 eine Lufteinlaßöffnung 4 auf, deren Oberkante 4' höher liegt als die Unterkante 2' der Nummernschild-Trägerplatte 2. Die Lufteinlaßöffnung 4 kann mit einer Anzahl von üblicherweise längsverlaufenden Rippen versehen sein.

Zwischen dem untenliegenden Randbereich der Nummernschild-Trägerplatte 2 und der zugewandten Oberfläche des Bugverkleidungsteils 3 ist ein sich längs der Nummerschild-Trägerplatte 2 erstreckendes Luftführungsteil 5 angeordnet, dessen Unterkante in einem vertikalen Längsschnitt über seine gesamte Längserstreckung als eine konvexe Wölbung 6 ausgebildet ist. Hierbei befindet sich die Vorderkante 6' der Wölbung 6 auf Höhe der Unterkante 2' der Nummernschild-Trägerplatte 2, während der tiefstliegende Punkt 6" der Wölbung 6 tiefer liegt als die Unterkante 2' der Nummernschild-Trägerplatte 2. Dagegen erstreckt sich die rückwärtige Kante 6''' der Wölbung 6 zum oberen Rand 4' der Lufteinlaßöffnung 4.

Das aus Blech oder Kunststoff bestehende und als ein separater Einsatz ausgebildete Luftführungsteil 5 hat an jeder Schmalseite der Nummernschild-Trägerplatte 2 ein Seitenteil 7. Dieses erstreckt sich jeweils von der Unterkante 2' der Nummersnschild-Trägerplatte 2 zur Unterkante 4" der Lufteinlaßöffnung 4 des Bugverkleidungsteils 3 und reicht stirnseitig mindestens annähernd an dieses heran.

Wie in der Zeichnung durch Pfeie schematisch dargestellt, wird die während der Fahrt sich an der Frontseite der Nummerschild-Trägerplatte 2 aufstauende Luft größtenteils durch die am Luftführungsteil 5 vorgesehene Wölbung 6 gelenkt in die Lufteinlaßöffnung 4 eingeleitet, wodurch die eingangs beim nächstliegenden Stand der Technik geschilderten Nachteile vermieden werden.

**Ansprüche**

1. Kraftfahrzeug, insbesondere Personenkraftwagen, das an seinem Bugbereich mit einer eine Nummernschild-Trägerplatte (2) tragenden Stoßstange (1) versehen ist, unterhalb der sich ein nach hinten zurückgesetztes und sich im wesentlichen über die ganze Fahrzeugbreite erstreckendes Bugverkleidungsteil (3) befindet, das im Bereich der Nummernschild-Trägerplatte eine Lufteinlaßöffnung (4) aufweist, deren Oberkante (4') höher oder etwa gleichhoch wie die Unterkante (2') der Nummernschild-Trägerplatte liegt, wobei deren untenliegender Randbereich über die Unterkante (1') der Stoßstange nach unten reicht, gekennzeichnet durch ein zwischen dem untenliegenden Randbereich der Nummernschild-Trägerplatte (2) und der zugewandten Oberfläche des Bugverkleidungsteils (3) vorgesehenes, sich längs der Nummernschild-Trägerplatte erstreckendes Luftführungsteil (5), dessen Unterkante in einem vertikalen Längsschnitt über seine gesamte Längserstreckung eine konvexe Wölbung (6) aufweist, wobei sich die Vorderkante (6') der Wölbung etwa auf Höhe der Unterkante (2') der Nummernschild-Trägerplatte befindet, der tiefstliegende Punkt (6") der Wölbung dagegen tiefer liegt als die Unterkante der Nummernschild-Trägerplatte, während die rückwärtige Kante (6''') der Wölbung zum oberen Rand (4') der Lufteinlaßöffnung (4) verläuft.

2. Kraftfahrzeug nach Anspruch 1, dadurch gekennzeichnet, daß das Luftführungsteil (5) an jeder Schmalseite der Nummernschild-Trägerplatte (2) ein Seitenteil (7) aufweist, das sich von deren Unterkante (2') zur Unterkante (4") der Lufteinlaßöffnung (4) im Bugverkleidungsteil (3) erstreckt und stirnseitig zumindest annähernd bis zum Bugverkleidungsteil heranreicht.

3. Kraftfahrzeug nach Anspruch 1 oder 2, dadurch gekennzeichnet, daß das Luftführungsteil (5) als ein separater Einsatz ausgebildet ist.

**Claims**

1. A motor vehicle, especially a passenger vehicle, provided at its front portion with a bumper bar (1) which carries a number plate support panel (2) and below which is located a rearwardly-set front covering part (3) extending over substantially the entire width of the vehicle and comprising, in the region of the number plate support panel (2), an air-inlet opening (4) the upper edge (4') of which is disposed at a higher level than, or substantially at the same level as, the lower edge (2') of the number plate support panel, and its lower edge zone extending downwardly beyond the lower edge (1') of the bumper bar, characterized by an air-conducting part (5) which is provided between the lower edge zone of the number plate support panel (2) and the facing surface of the front covering part (3) and which extends along the number plate support panel with its lower edge having, in vertical longitudinal section, a convex curved portion (6) extending over its entire length, the forward edge (6') of the curved portion being located at generally the same level as the lower edge (2') of the number plate support panel and the lowermost point (6") of the curved portion being at a lower level than the lower edge of the number plate support panel, whilst the rearward edge (6''') of the curved portion extends to the upper edge (4') of the air-inlet opening (4).

2. A vehicle according to claim 1, characterized in that the air-conducting part (5) has, at each narrow side of the number plate support panel (2), a side part (7) which extends from the lower edge (2') of the panel to the lower edge (4") of the air-inlet opening (4) in the front covering part (3) and, at the front face, extends at least substantially as far as the front covering part.

3. A vehicle according to claims 1 or 2, characterized in that the air-conducting part (5) is formed as a separate insert.

**Revendications**

1. Véhicule automobile, notamment voiture de tourisme, qui, dans sa zone avant, est muni d'un pare-chocs (1) portant un support (2) de la plaque d'immatriculation et au-dessous duquel se trouve un becquet (3) placé en retrait vers l'arrière et s'étendant essentiellement sur toute la largeur du véhicule, et qui, dans la zone du support de la plaque d'immatriculation, comporte un orifice d'entrée d'air (4), dont le bord supérieur (4') est plus haut, ou à peu près à la même hauteur, que le bord inférieur (2') du support de la plaque d'immatriculation, la zone de bord inférieur de celui-ci s'étendant vers le bas au-delà du bord inférieur (1') du pare-chocs, véhicule automobile caractérisé par un élément de guidage d'air (5) prévu entre la zone de bord inférieur du support (2) de la plaque d'immatriculation et la surface tournée vers cette zone du becquet (3), et qui s'étend le long du support de la plaque d'immatriculation, élément de guidage d'air (5) dont le bord inférieur présente, dans une coupe longitudinale verticale, sur toute son extension en long, une cambrure convexe (6), le bord avant (6') de la cambrure se trouvant à peu près au niveau du bord inférieur (2') du support de la plaque d'immatriculation, par contre le point situé le plus bas (6") de la cambrure se situant à un niveau inférieur à celui du bord inférieur du support de la plaque d'immatriculation, tandis que le bord arrière (6''') de la cambrure s'étend vers le bord supérieur (4') de l'orifice d'entrée d'air (4).

2. Véhicule automobile selon la revendication 1, caractérisé en ce que l'élément de guidage de l'air (5) comporte, sur chaque petit côté du support (2) de la plaque d'immatriculation, une partie latérale (7), qui s'étend du bord inférieur (2') de ce support au bord inférieur (4") de l'orifice d'entrée d'air (4) ménagé dans le becquet (3) et atteint frontalement, au moins à peu près, ledit becquet.

3. Véhicule automobile selon la revendication 1 ou 2, caractérisé en ce que l'élément de guidage de l'air (5) est constitué sous la forme d'une pièce d'insertion séparée.